(19) Europäisches Patentamt
European Patent Office
Office européen des brevets

(11) **EP 2 484 741 A2**

(12) **EUROPÄISCHE PATENTANMELDUNG**

(43) Veröffentlichungstag:
**08.08.2012  Patentblatt 2012/32**

(51) Int Cl.:
***C09K 5/10*** *(2006.01)*    ***C09K 5/20*** *(2006.01)*

(21) Anmeldenummer: **12000647.3**

(22) Anmeldetag: **01.02.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **02.02.2011  DE 102011010019**

(71) Anmelder: **Lübbke, Norbert Uwe**
**22397 Hamburg (DE)**

(72) Erfinder: **Lübbke, Norbert**
**22397 Hamburg (DE)**

(74) Vertreter: **Limbeck, Achim**
**Rechtsanwaltskanzlei Dr. Limbeck**
**In der Buch 9**
**53902 Bad Münstereifel (DE)**

(54) **Kälte- und Wärmeträgerflüssigkeit**

(57)    Kälte- und Wärmeträgerflüssigkeit auf der Basis von Monoethylenglykol zur Einbringung in den jeweiligen Heiz-, Kühl- und Wärmekreislauf eines Systems, umfassend:

- 10 - 90% Monoethylenglykol
- 10 - 90% Kaliumacetat
- 1 - 40% Korrosionsinhibitor.

EP 2 484 741 A2

**Beschreibung**

Technisches Gebiet

Die Erfindung betrifft eine Kälte- und Wärmeträgerflüssigkeit auf der Basis von Monoethylenglykol zur Einbringung in den jeweiligen Heiz-, Kühl- und Wärmekreislauf eines Systems. Die erfindungsgemäße Kälte- und Wärmeträgerflüssigkeit dient insbesondere, aber nicht ausschließlich der thermischen und energieeffizienten Optimierung von Wärmekreislaufsystemen in Wohnungen und Häusern (Heizungskreisläufe, Gas-, Öl-, Kohle- und Holzheizungen), solarthermischen Anlagen in Kombination mit Schichtspeicher und Wärmepumpen, von Gebäudeklimatisierungssystemen (Rückkühlkreisläufe der Kältemaschinen), Wärmerückgewinnung bei Zu- und Abluftanlagen, der Kälteverteilung sowie der Optimierung von geothermischen Anlagen. Weiterhin findet die Kälte- und Wärmeträgerflüssigkeit Verwendung in Heiz- und Kühlkreisläufen in der Produktion (Prozesskälte und -wärme), bei der Wärmerückgewinnung aus der Produktion (Nutzung für Heizung und Brauchwasser), in Fernwärmeheizsystemen. Darüber hinaus kommt aber auch eine Verwendung bei der Kälteversorgung in Lebensmittelgeschäften (Kühlvitrinen und Frischhaltetruhen), bei der Rückkühlung der Kältemaschinen, als Motorkühlung in Fahrzeugen sowie zur Vor- / Erwärmung von Werkzeugmaschinen in Betracht. Weitere Anwendungsbereiche sind nicht ausgeschlossen, z.B. Flughäfen, Rasenheizung, Kunsteisbahnen etc.

Stand der Technik

In Fahrzeugen, solarthermischen Anlagen und in anderen Systemen werden als Wärmeträgerflüssigkeit in der Regel frostsichere Gemische aus Wasser und Propylenglykol als Wärmeträger verwendet, welches die Heiz-, Kühl- und Wärmekreisläufe durchfließt und im Beispiel der solarthermischen Anlagen die aufgenommene Sonnenwärme über den Wärmetauscher an das Brauchwasser abgibt. Die eingesetzte Flüssigkeit muss dabei einerseits im Winter frostsicher (vorzugsweise bis unter -30˚C) sein, um Schäden durch Eisbildung in den Leitungen zu verhindern und andererseits wegen der hohen Temperaturen verdampfungssicher sein. Im Winter sind die Fernwärmeerzeuger darüber hinaus gezwungen, das Wasser über 100˚C aufzuheizen und ein Wasser-/ Dampfgemisch den jeweiligen Endverbrauchern mit Überdruck zuzuleiten. Das führt zu einer erhöhten und notwendigen Pumpleistung im Fernheizsystem. Insofern ist der Einsatz einer Wärmeträgerflüssigkeit sinnvoll, die einen Siedepunkt von vorzugsweise mehr als 130˚C aufweist, ohne, dass ein Dampfgemisch entsteht. Wärmeträgerflüssigkeiten sollten weiterhin geeignet sein, die Entstehung von Kalk und Rost im Heizkreislauf sowie erhöhte ph-Werte zu verhindern, welche sich ungünstig auf den Heizungskreislauf auswirken.

Wasser ist aufgrund seiner sehr hohen Wärmekapazität von ca. 4,2 kJ/kg bzw. seiner hohen spezifischen Verdampfungsenthalpie von rund 2000 kJ/kg und seiner Schmelzenthalpie von 333 kJ/kg ein sehr guter Wärme- bzw. Kälteträger und stellt somit das häufigste Kühlmittel (bspw. als Wasserkühlung) dar. Es sollte allerdings kein vollentsalztes Wasser verwendet werden, da es zum einen keine Schutzschicht ablagern kann, zum anderen Änderungen des pH-Wertes nicht abpuffert und daher in besonderem Maße korrosiv wirkt und auch Dichtungsmaterial angreift. Wasser neigt zur Kalk, Schlamm- und Rostbildung. Es nimmt die Wärme relativ träge auf und gibt diese Wärme zeitversetzt relativ langsam an die Raumluft wieder ab. In Abwesenheit bestand bislang die Gefahr, dass bspw. Heizungsanlagen einfrieren und Rohrleitungen im Winter platzen. Ein weiterer Nachteil, der sich durch die Verwendung von Wasser ergibt, ist die durch Korrosion hervorgerufene Neigung zu störenden Geräuschen im Heizungskreislauf. Ferner sind eine gezielte Steuerung der Rücklauftemperatur, eine gezielte Steuerung der Restwärme sowie auch eine gezielte Steuerung der Wärmekapazität nicht möglich.

Wasser wird nicht nur im flüssigen, sondern auch im gas- bzw. dampfförmigen Zustand als Wärmeträger und im teilweise festen bzw. eisförmigen Zustand als Kälteträger verwendet.

Die Verwendung als Dampf bietet den Vorteil, den Transport in Fernwärmeleitungen in Form von überhitztem Hochdruckdampf mit relativ geringen Energieverlusten vornehmen zu können. Am Zielort wird der überhitzte Dampf (Heißdampf) dann in Dampfumformstationen (Druckreduktion mit Wassereinspritzung) in Sattdampf umgewandelt. Der Sattdampf kann dann im nachfolgenden Wärmeüberträger sehr effektiv seine Wärme durch Kondensation wieder abgeben (analog: Hochspannungsleitung, Trafostation). Bei kürzeren Abständen vom Wärmeerzeuger zum Verbraucher können (auch hier analog zum Stromtransport) niedrigere Transportdrücke verwendet werden.

Die Verwendung als Eis bietet den Vorteil, relativ hohe Leistungen mit geringen Volumenströmen übertragen zu können (vgl. spezifische Wärmekapazität und Schmelzenthalpie). Um fließfähig (Eisbrei) zu bleiben, muss das Wasser dazu allerdings mit Gefrierschutzmitteln versetzt werden.

Die Verwendung von Monoethylenglykol als Bestandteil von Kälte- oder Wärmeträgerflüssigkeit ist nach dem Stand der Technik bekannt. Dieses kommt bspw. als Frostschutzbasis von Wärmeträgerflüssigkeiten zum tragen, welche als Kühlsoleflüssigkeiten zur Befüllung von Erdsondenanlagen eingesetzt werden, um die Erdwärmeenergie durch Wärmepumpensysteme nutzen zu können. Wärmeträgerflüssigkeiten auf der Basis von Monoethylenglykol in einer bestimmten Zusammensetzung können im jeweiligen Kühl-, Heiz- und Wärmekreislauf durch die abweichenden Gefrierpunkte und Siedepunkte, durch die Dichteänderung des Stoffes, bestimmte prozessoptimierende energetische Vorteile aufweisen. Diese gilt es bewusst zu erkennen, zu beschreiben und einzusetzen.

Darstellung der Erfindung

Der vorliegenden Erfindung liegt die Aufgabe zu Grunde, eine Kälte- und Wärmeträgerflüssigkeit auf der Basis von Monoethylenglykol zu schaffen, die geeignet ist, den geschilderten Anforderungen zu entsprechen. Insbesondere ist es Aufgabe der Erfindung, eine Kälte- und Wärmeträgerflüssigkeit zu schaffen, welche die Entstehung von Kalk und Rost, Frostschäden, die Entstehung von Wasserdampf sowie pH-Werte vermeidet, die sich ungünstig auf die jeweiligen Systeme auswirken könnten. Insbesondere ist es Aufgabe der Erfindung, eine Wärmeträgerflüssigkeit zu schaffen, die gegenüber Wasser eine deutlich schnellere Wärmeaufnahme gewährleistet und geeignet ist, Wärme schneller abzugeben.

Erfindungsgemäß wird die voranstehende Aufgabe mit den Merkmalen des Anspruchs 1 gelöst. Vorteilhafte Ausgestaltungen der erfindungsgemäßen Kälte- und Wärmeträgerflüssigkeit sind in Unteransprüchen angegeben.

Danach umfasst eine Kälte- oder Wärmeträgerflüssigkeit (nachstehend als Trägerflüssigkeit bezeichnet) der eingangs genannten Art (nachstehende %-Werte verstehen sich als Volumenprozente):

- 10 - 90% Monoethylenglykol (C2H6O2)
- 10 - 90% Kaliumacetat ($CH_3COOK$)
- 1 - 40% Korrosionsinhibitor.

Als Inhibitor kommen sämtliche Substanzen in Betracht, die eine oder mehrere Reaktionen - chemischer, biologischer oder physikalischer Natur -so beeinflussen, dass diese verlangsamt, gehemmt oder verhindert werden.

Darüber hinaus umfasst die Trägerflüssigkeit vorzugsweise eine oder mehrere der nachfolgenden Substanzen:

- 0 - 70% Spezialsalz
- 0 - 10% Propylenglykol
- 0 - 10% Ammoniumacetat
- 0 - 1% Nanosilber
- als Restbestandteil destilliertes Wasser.

Die Zusammensetzung der Trägerflüssigkeit erfolgt durch das Vermischen von Einzelsubstanzen bei vorzugsweise 30˚C. Die Reihenfolge während des Vermischens kann die Eigenschaften der Trägerflüssigkeit verändern; dies ergaben lange Versuchsreihen.

Die Optimierungsprozesse der Trägerflüssigkeit erfolgten im Labor. Durch etwa 100 praxisnahe Test-Versuche in Heizungsanlagen und Kühlsystemen und in einem TDI und Otto Motor ist der sichere Nachweis geführt worden, dass die Trägerflüssigkeit absolut stabil arbeitet, dass beim Erhitzen der Trägerflüssigkeit keine Ausfällungen entstehen und dass sich die Trägerflüssigkeit auch thermisch energieeffizient verhält.

Kurzbeschreibung der Erfindung anhand von Untersuchungen

Weitere Ziele, Merkmale, Vorteile und Anwendungsmöglichkeiten der erfindungsgemäßen Trägerflüssigkeit ergeben sich aus der nachfolgenden Beschreibung mehrerer Ausführungsbeispiele anhand der dargestellten Untersuchungsergebnisse, welche teilweise in Zeichnungen bzw. Tabellen dargestellt sind.

In den Zeichnungen zeigen

Fig.1 die Wärmekapazität einer Trägerflüssigkeit A;

Fig.2 die Wärmekapazität einer Trägerflüssigkeit B;

Fig.3 und 4 die Wärmekapazität einer Trägerflüssigkeit B;

Fig.5 die Messwerte einer Trägerflüssigkeit;

Fig.6 Aufheizkurven;

Fig.7 Aufheizkurven anhand einer weiteren beispielhaften Gleichung;

Fig.8 das Verhältnis Wärme und Kälte in Abhängigkeit zur Zeit im Diagramm;

Fig.9 die Dauer der Erwärmung und Abkühlung im Bereich von 40 bis 100 ˚C;

Fig.10 die Dauer der Erwärmung und Abkühlung im Bereich von 60 bis 80 ˚C

Fig.11 die Temperatur während der Erhitzung von Wasser, reine Flüssigkeit und deren Gemisch in Abhängigkeit zur Zeit;

Fig.12 die Temperatur während der Abkühlung von Wasser, reine Flüssigkeit und deren Gemisch in Abhängigkeit zur Zeit;

Fig.13 einen Vergleich der Erwärmung und Abkühlung von 1,5 und 3 Liter zwischen 40 bis 100 ˚C;

Fig.14 einen Vergleich der Erwärmung und Abkühlung von 1,5 und 3 Liter zwischen 60 bis 80 ˚C;

Fig.15 das Aufwärmverhalten der Trägerflüssigkeiten A,D,E und von Wasser.

Verwendung in der Heizungstechnik sowie in der Fernwärmetechnik

Die erfindungsgemäße Trägerflüssigkeit ist optimal geeignet zur Verwendung in der Heizungstechnik sowie in der Fernwärmetechnik. Je nach Verdünnung ist diese bis zu -40 bis -60˚C gegen Frost abgesichert. Darüber hinaus ist sie geeignet, die Temperaturdifferenz gegenüber Wasser bei identischer Energiezuführung und identischer Masse zu vervielfachen. Es hat sich herausgestellt, dass die Temperaturleitfähigkeit der Trägerflüssigkeit höher ist als die von Wasser. Aus diesem Grund wird diese bei der vorteilhafterweisen Verwendung in Heizungsanlagen die Wärme schneller aufnehmen und schneller an die Heizkörper abgeben. Dies reduziert die Verluste und steigert die Effizienz einer Heizungsanlage. Da die Siedetemperatur bei bis zu 192˚C liegt, werden geringere Verdampfungsverluste als bei Wasser erwartet. Außerdem ist es aufgrund der hohen Siedetemperatur möglich, dass die Heizungssysteme bei höheren Betriebstemperaturen ohne erhöhten Druck funktionieren werden.

Im Rahmen einer Prüfung durch die technische Universität Hamburg wurden die spezifischen Wärmekapazitäten sowie deren Temperaturabhängigkeit im Bereich von 25 - 60 ˚C der drei im Folgenden genannten Trägerflüssigkeiten unter Umgebungsdruck ermittelt,

a) eine Trägerflüssigkeit A (QS 100 S) mit einem Cp Wert 1,7 - 2,0, umfassend

- 70 - 90% Monoethylenglykol
- 10 - 50% Kaliumacetat
- 5% Korrosionsinhibitor
- 0 - 10% Propylenglykol
- 0 - 10% Ammoniumacetat sowie als
- Restbestandteil destilliertes Wasser.

b) eine Trägerflüssigkeit B (QS 100 Green) mit einem Cp Wert 2,2, umfassend

- 10 - 60% Monoethylenglykol
- 10 - 50% Kaliumacetat
- 20 - 40% Korrosionsinheibitor sowie als
- Restbestandteil destilliertes Wasser.

c) eine weitere Trägerflüssigkeit C mit einem Cp Wert 3,1, umfassend

- 10% Monoethylenglykol
- 10 - 50% Kaliumacetat
- <2% Korrosionsinheibitor
- 50 - 70% Spezialsalz sowie als
- Restbestandteil destilliertes Wasser.

Bestimmung der spezifischen Wärmekapazitäten

Die Messungen der spezifischen Wärmekapazitäten erfolgten mittels eines Kaloriemeters. Das Kaloriemeter maß den aufgenommenen Wärmestrom des mit der Probe gefüllten Probenzylinders im Vergleich zu einem nicht gefüllten Referenzzylinder. Die jeweilige Messung erfolgte entlang einer Temperaturrampe, die den gewünschten Untersuchungsbereich abdeckt. Die Versuchsdauer für das Abfahren einer Temperaturrampe mit den benötigten Vor- und Nachlaufzeiten des Gerätes betrug 36 Stunden. Die Einwaage der zu untersuchenden Flüssigkeiten betrug zwischen zehn und zwölf Gramm. Zum Ausgleich von etwaigen Unterschieden des Proben- und des Referenzzylinders, wurde eine Messung mit leeren Behältern vorab vorgenommen und der gemessene Wärmestrom bei den Messungen mit den zu analysierenden Flüssigkeiten entsprechend verrechnet. Die allgemeine Auswertebeziehung ist durch die nachstehende Gleichung gegeben:

$$Q = m_{Probe} \cdot c_{p(T)} \cdot (T_{Ofen} - T_{Probe})$$

Die Messungen für die Trägerflüssigkeit A wurden mittels eines Gerätes durchgeführt, das die spezifische Wärmekapazität und die Wärmeleitfähigkeit (bei bekannter Dichte) gleichzeitig misst. Über eine Heizschlange wurde ein definierter Wärmestrom zugeführt und über eine örtlich differenzierte Temperaturmessung die Wärmeleitfähigkeit berechnet. Die Berechnung erfolgte auf Grundlage der in nachstehender Gleichung genannten instationären Temperaturabhängigkeit.

$$\frac{dT}{dt} \quad \frac{\lambda}{p \cdot c_p} \quad \frac{d^2T}{dx^2}$$

Die benötigte Probenmenge betrug fünf bis zehn Gramm und war unter Zuhilfenahme des Flüssigkeitskits aufzubringen. Die verwendeten Messgeräte wiesen eine Genauigkeit von unter 2% auf.

Messergebnisse

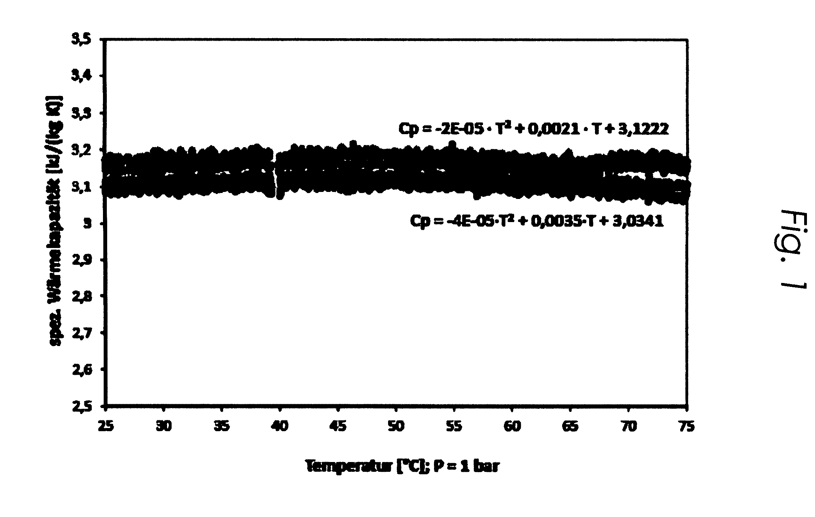

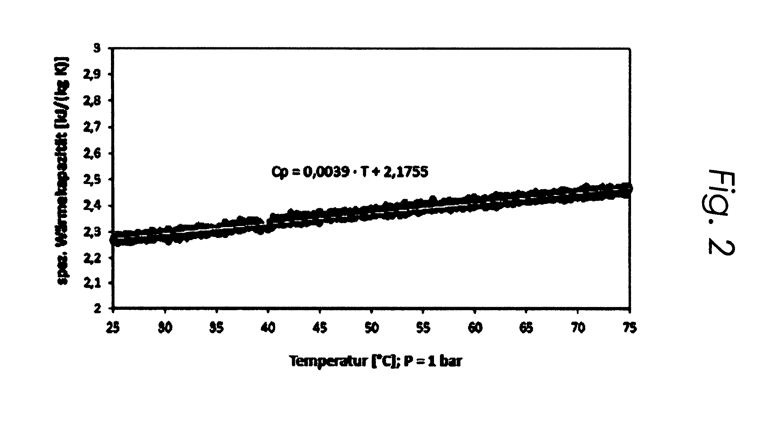

Die Messungen ergaben für die Trägerflüssigkeit C eine geringe Temperaturabhängigkeit, die in Fig.1 angegeben ist. Die spezifische Wärmekapazität betrug hier im Mittel 3,08 kJ/ (kg K). Für Trägerflüssigkeit B ergab sich die in Fig.2 gezeigte Abhängigkeit von der Temperatur. Die spezifische Wärmekapazität lag zwischen 2,27 und 2,46 kJ/ (kg K).

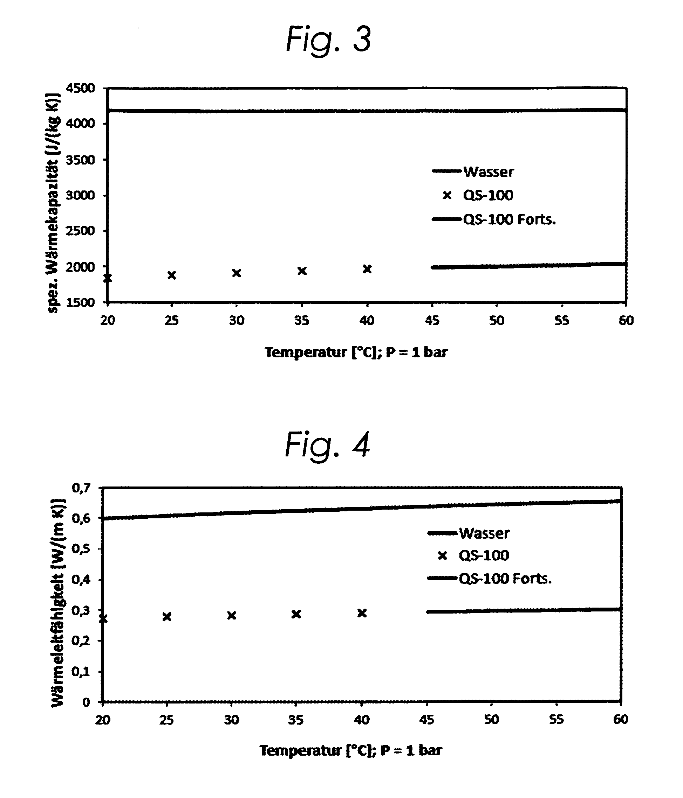

In den Fign.3 und 4 sind die Ergebnisse der Trägerflüssigkeit A gezeigt. Die spezifische Wärmekapazität betrug zwischen 1,93 und 2,14 kJ/(kg K), die Wärmeleitfähigkeit zwischen 0,272 und 0,301 W/ (m K). Die spezifische Wärmekapazität wies im Mittel einen Wert von 2,05 kJ/ (kg K), die Wärmeleitfähigkeit einen Mittelwert von 0,288 W/ (m K) auf.

Die Messungen ergaben für die drei Testflüssigkeiten A,B,C spezifische Wärmekapazitäten unterhalb derjenigen von Wasser. Für Trägerflüssigkeit A und B zeigten sich die für Flüssigkeiten typischen, mit der Temperatur ansteigenden linearen Verläufe. Die Trägerflüssigkeit C wies eine erhöhte spezifische Wärme auf, die im untersuchten Temperaturbereich nahezu konstant blieb. Auffällig ist die Abweichung der Wiederholungsmessung von der ersten Messkurve. Es ist nicht auszuschließen, dass die Ursache dieser Unterschiede in dem Phasenzustand von Trägerflüssigkeit C liegt, d.h. dass es sich bei dieser Flüssigkeit (leicht trüb) nicht um eine physikalische Lösung handelt.

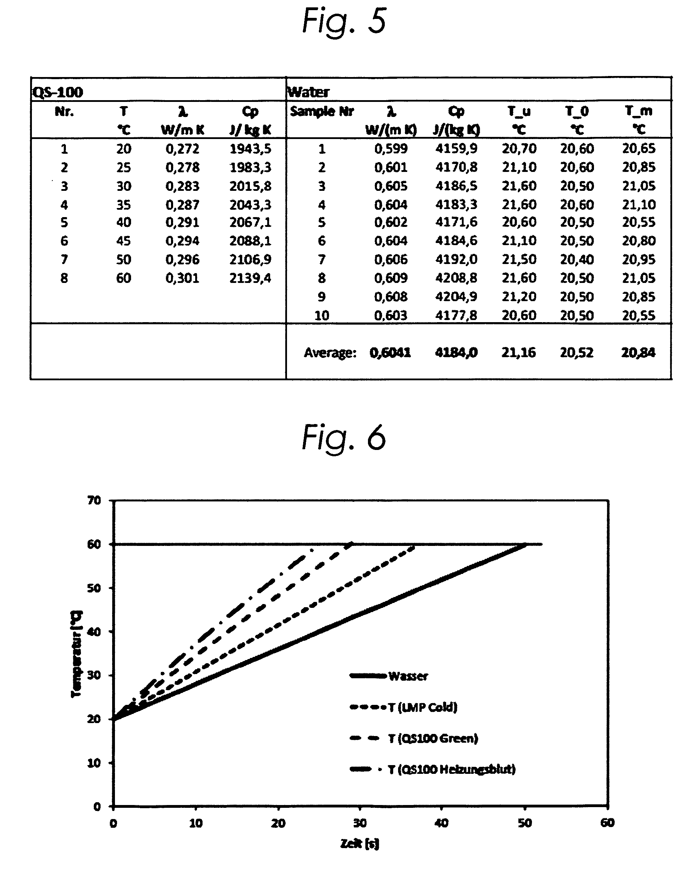

In einem weiteren Prüfungsbericht der technischen Universität Hamburg wurde die kalimetrische Aufheizkurve ermittelt. Es erfolgte eine adiabate Wärmezufuhr mit konstantem Wärmestrom Q = const. Die Temperatur ist durch die in Fig.6 dargestellte Gleichung gegeben. Die resultierenden Aufheizkurven sind in Fig.6 gezeigt (Gründe für von den Versuchen abweichende Ergebnisse: Eine Mikrowelle erwärmt Flüssigkeiten unterschiedlicher Zusammensetzung bei gleicher Wärmeleistung unterschiedlich, da die Mirkowellenenergie im Wesentlichen von Wasser absorbiert wird. Die Verluste an die Umgebung sind abhängig vom Temperaturunterschied zur Umgebung.). Die Darstellung in Fig.6 beruht auf den nachstehenden Formeln und Werten:

$$T = \frac{\dot{Q}}{m \cdot c_p} \cdot t + T_0$$

Beispiel:

$\dot{Q}$ = 500 W
$T_0$ = 20 ˚C
m = 0,15 kg

mit

$$c_{p\,OS100\ Green} = 0,0039 \cdot T + 2,1755 \ \frac{kJ}{kg \cdot K}$$

$$c_{p\,LMP\ Cold} = 3,1000 \ \frac{kJ}{kg \cdot K}$$

$$c_{p_{QS100\ Heizungsblut}} = 0,0061 \cdot \bar{T} + 1,7262\ \frac{kJ}{kg \cdot K}$$

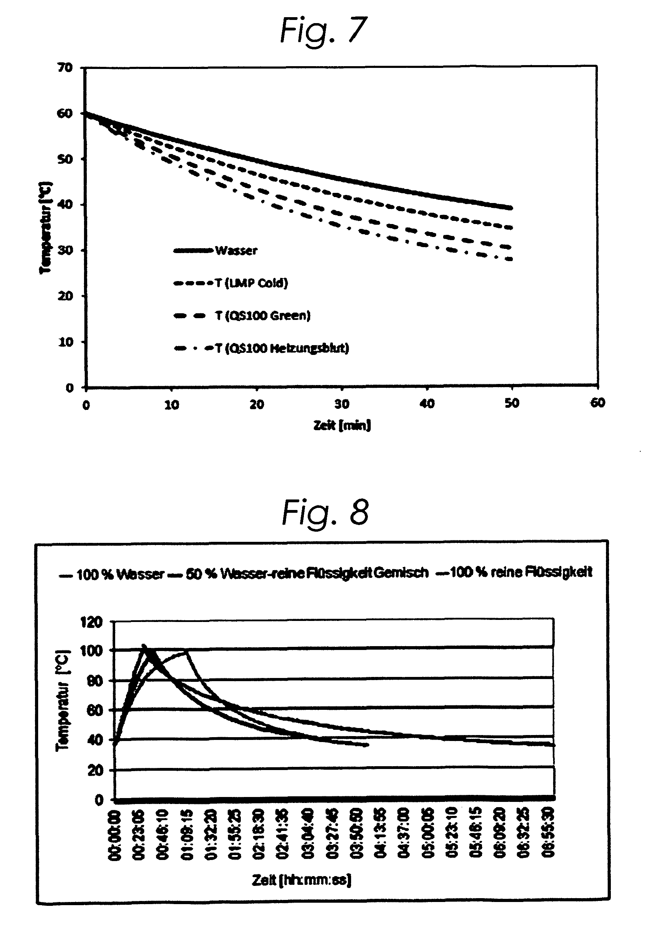

Die weitere Ermittlung der Abkühlkurven erfolgt anhand der in Fig.7 dargestellten Gleichung:

$$\frac{T - T_u}{T_0 - T_u} = exp\left(\frac{-\alpha \cdot F}{m \cdot c_p} \cdot t\right)$$

mit

$T_0$    Anfangstemperatur (60 °C)
$T_\alpha$    Umgebungstemperatur (20 °C)
F    Freie Oberfläche das Gefässes (Dmr 0, 2 m)
m    Flüssigkeitsmenge (0, 15 kg)
$\alpha$    Wärmeübergangskoeffizient $\left(5\ \frac{W}{m^2 \cdot K}\right)$

**Abbildung 2.1: Abkühlkurven mit Beispieldaten**
mit

$$c_{p_{OS100\ Green}} = 0,0039 \cdot T + 2,1755\ \frac{kJ}{kg \cdot K}$$

$$c_{p_{LMP\ Cold}} = 3,1000\ \frac{kJ}{kg \cdot K}$$

$$c_{p_{QS100\ Heizungsblut}} = 0,0061 \cdot \bar{T} + 1,7262\ \frac{kJ}{kg \cdot K}$$

Der nachstehend beschriebene Bericht der Universität Bursa behandelte die Eigenschaften der Energieaufnahme / Energieabgabe der Trägerflüssigkeit während der Erwärmung und des Abkühlens in Abhängigkeit von der Zeit. Demnach kann sich die erfindungsgemäße Trägerflüssigkeit unter gleichen Bedingungen, d. h. bei identischer Energiezufuhr bis zu 34°C schneller aufheizen. Im geschlossenen Heizungsrohr- System wird dieser Unterschied noch größer.
Die erforderlichen Prüfungen wurden im Labor durchgeführt. Die Testergebnisse sind wie folgt:
Prüfbedingungen:

Labor Temperatur: 27°C
Die Menge der getesteten Flüssigkeit: 3 Liter

Testphase:

In dieser Prüfung wurden 100 % Wasser (3 Liter), ein Gemisch aus 50 % Wasser (1,5 Liter) und 50 % Trägerflüssigkeit (1,5 Liter) und 100 % reine Trägerflüssigkeit zu verschiedenen Zeiten in eine Kabine mit der gleichen Umgebungsbedingungen platziert, bis auf Temperaturen von 100°C gleichmäßig erwärmt und dann selbstständig ausgekühlt.

Testergebnisse:

Die Ergebnisse wurden separat verglichen. Wasser, Gemisch und die reine Trägerflüssigkeit im Verhältnis Wärme und Kälte sind im Diagramm (Fig.8) dargestellt.

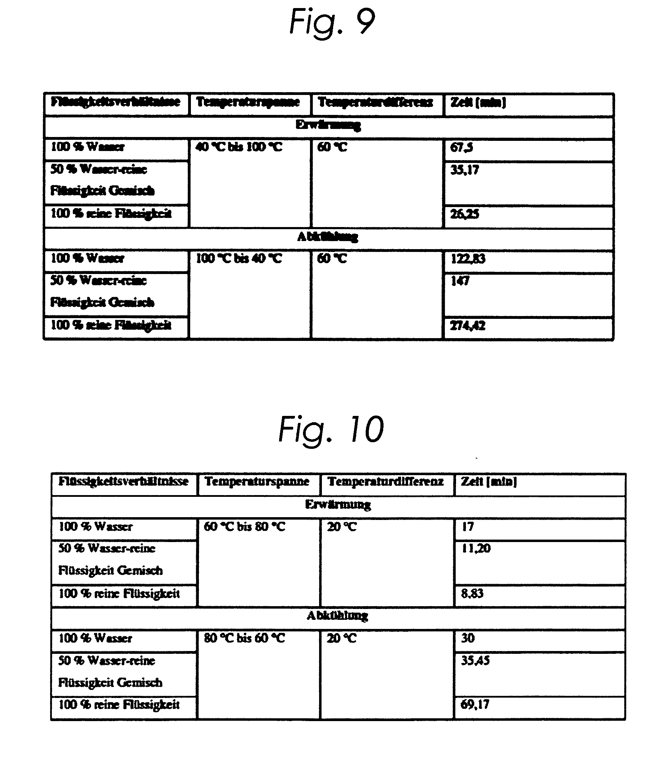

Die Dauer der Erwärmung und Abkühlung im Bereich von 40 bis 100°C ist in Fig.9 zu sehen.
In Fig.8 ist zu sehen, dass bei 40 °C bis 100 °C während der Erwärmung sind die 100 % reine Trägerflüssigkeit, vor den 100 % Wasser, etwa 41 Minuten sich schneller erwärmt, das Gemisch aus 50 % Wasser und 50 % Trägerflüssigkeit vor den 100 % Wasser etwa 32 Minuten schneller erwärmt. Bei der Abkühlung von 100 ˚C bis 40 ˚C und kühlt die reine Trägerflüssigkeit wiederum nach über 150 Minuten (2,5 h) nach den 100 % Wasser und das Gemisch nach ca. 24 Minuten nach den 100 % Wasser ab. Die Erwärmung und Abkühlung der Mischung werden in den Fign.9 und 10 zusammengefasst.

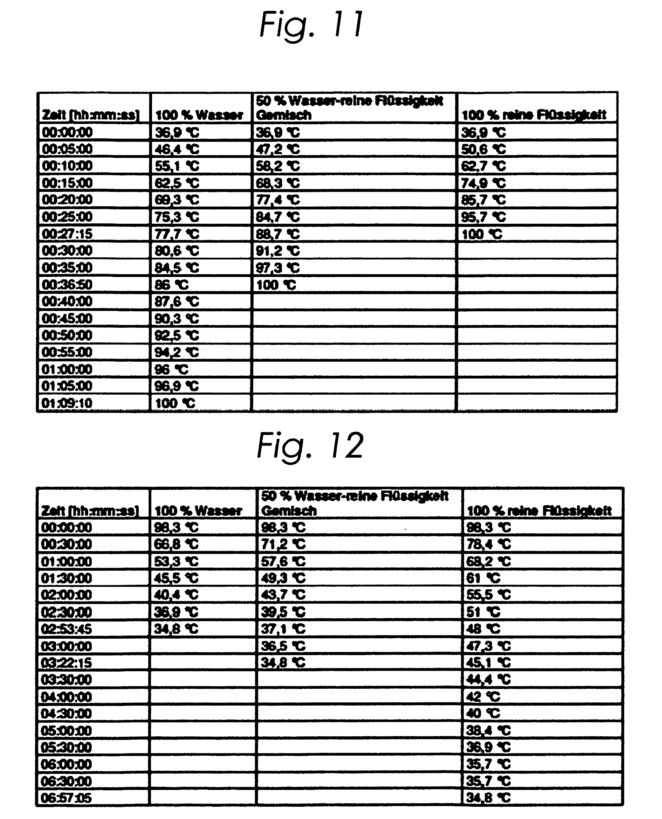

Bei der Erwärmung von 60 ˚C bis 80 ˚C ist die 100 % reine Trägerflüssigkeit ca. 8 min schneller erwärmt als 100 % Wasser, das Gemisch wird 5,2 min schneller erwärmt als 100 % Wasser. Bei der Abkühlung von 80 ˚C bis 60 ˚C ist die 100 % reine Trägerflüssigkeit ca. 39 min langsamer abgekühlt als 100 % Wasser, das Gemisch kühlt 5,5 min langsamer ab als 100 % Wasser. In den Fign.11 und 12 werden die Werte von dem Wasser, der reinen Trägerflüssigkeit und deren Gemisch während der Erwärmung und Abkühlung zusammengefasst. In den Fign.9 und 10 kann man sehen, dass die Erwärmung der reinen Trägerflüssigkeit und das Gemisch schneller stattfindet als beim Wasser. Während der Abkühlung ist der gegenteilige Effekt zu sehen, die reine Trägerflüssigkeit und das Gemisch kühlt langsamer ab als 100 % Wasser.

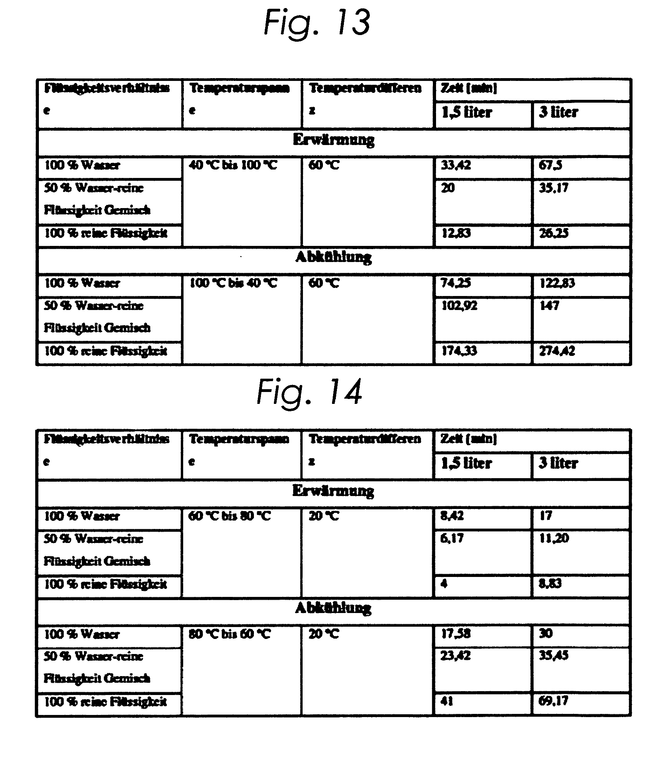

Die Experimente wurden mit einem Volumen von 1,5 Liter wiederholt durchgeführt, so dass eine 2-fache Erhöhung als Folge der Erwärmung und Abkühlung zu sehen war. In der Fig.13 und 14 wurden für 1,5 und 3 Liter im Vergleich der Bereiche von 40 bis 100 ˚C und 60 bis 80 ˚C im Vergleich der Erwärmung und Abkühlung zusammengefasst.

In einer weiteren vorteilhaften aber nicht in den Testergebnissen dargestellten Ausführungsform umfasst diese Trägerflüssigkeit D (QS 100 H) mit einem Cp Wert 3,0 - 3,9, umfassend

- 10 - 50% Monoethylenglykol
- 10-90% Kaliumacetat
- <1% Korrosionsinheibitor
- < 1 % Nanosilber sowie als
- Restbestandteil destilliertes Wasser.

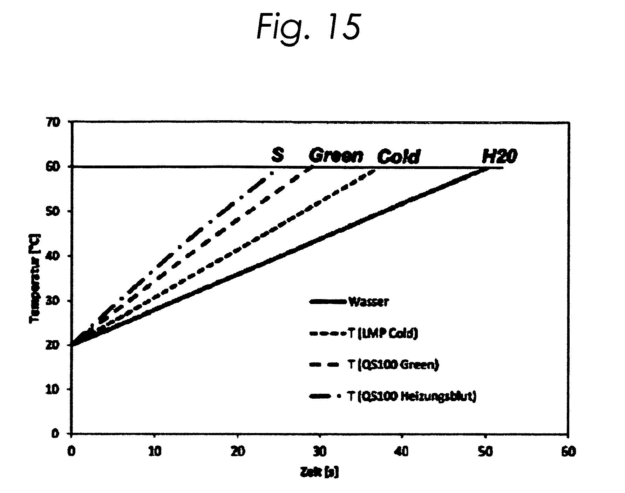

Das Aufwärmverhalten der Trägerflüssigkeiten A,C,D und von Wasser sind in Fig.15 dargestellt, mit

$$c_{P\,QS100\,Green} = 0{,}0039 \cdot T + 2{,}1755 \; \tfrac{kJ}{kg\cdot K}$$

$$c_{P\,LMP\,Cold} = 3{,}1000 \; \tfrac{kJ}{kg\cdot K}$$

$$c_{P\,QS100\,Heizungsblut} = 0{,}0061 \cdot T + 1{,}7262 \; \tfrac{kJ}{kg\cdot K}$$

Verwendung in der Solarthermie

Die solarthermischen Flächen- und Röhrengeräte sollten auf der einen Seite im Winter gegen > Frost - 20 Grad geschützt werden, auf der anderen Seite sollte die Wärmeträgerflüssigkeit bis zu 250 Grad Temperatur "aushalten". In den Übergangszeiten ist die Nutzung der Solarthermie unbedenklich. Dabei wird um jedes Grad "gekämpft", um eine hohe Sonnenenergieausbeute zu erhalten.

Tests mit der Trägerflüssigkeit A (QS 100 S) haben gezeigt, dass diese besonders geeignet ist, den jeweiligen Schichtspeicher auch bei geringen Lichtintensitäten zu beladen. Ungünstige Dachflächenneigungen oder Dachausrichtungen können mit Trägerflüssigkeit A ausgeglichen werden. Je nach Wetterlage können mit Trägerflüssigkeit A bereits im Februar / März / April die Sonnenenergie zur Speicherung genutzt werden.

In Kombination mit einem 10-180m³ großen Schichtspeicher, der mit Wasser gefüllt ist, kann über einen Wärmetauscher, der Trägerflüssigkeit A führt, ein Heizkreislauf über eine Wärmepumpe betrieben werden, die 70-80˚C heiße Trägerflüssigkeit A erzeugt und an die Heizungsradiatoren weiterleitet.

Anwendungen im Fernwärmebereich

In einem Primarkreislauf (vom Kraftwerk zum Abnehmer) wird Wasser bis zu 130˚C erhitzt und über starken Druck zum Verbraucher geleitet. Bspw. müssen hierbei in Hamburg bis zu 13km Strecke überwunden werden. Trägerflüssigkeit D (QS 100 H) wäre mit einer Siedetemperatur von bis zu 198˚ C zwar geeignet, den Wärmetransport sicherzustellen, aber die Kosten für das Arbeitsmittel ist im Verhältnis zu Wasser viel zu teuer.

Im Sekundärkreislauf beim Kunden könnte die Trägerflüssigkeit A (QS 100 S) als Arbeitsmittel sehr schnell die Wärme aufnehmen und abgeben. Zusätzlich können mittels der Trägerflüssigkeit A tiefere Rücklauftemperaturen erzielt werden, mit der Folge, dass mehr Kunden als bisher an das Fernwärmesystem angebunden werden könnte. Allein bei den Vattenfallkunden in Hamburg könnten 13,5 Millionen Liter auf Kundenseite ausgetauscht werden.

Entwicklung von Kühlerflüssigkeiten

Die erfindungsgemäße Trägerflüssigkeit lässt sich auch als Kühlmittel in Fahrzeugen ausgezeichnet einsetzen, um eine schnellere Aufheizung des jeweiligen Fahrzeug-Innenraumes zu erzielen. Je kleiner die Fahrzeug-Motoren sind, umso schwieriger wird es angenehm warme Fahrgastzellen zu erzeugen. Die neue Kombination der Trägerflüssigkeit aus Monoethylenglykol und Kaliumacetat kann darüber hinaus erheblich zu einer Kostensenkung für Kühlmittel beitragen.

Vorteile der erfindungsgemäßen Trägerflüssigkeit

Die Vorteile der erfindungsgemäßen Trägerflüssigkeit seien im Nachstehenden zusammenfassend dargestellt.
Die Trägerflüssigkeit bewirkt eine Kosteneinsparung, welche auch teilweise an dem günstigen Strömungsverhalten liegt. Heizungsanlagen bleiben jahrelang sauber, solange die Trägerflüssigkeit in ausreichender Konzentration eingebaut ist. Die Lebensdauer der Heizungsgeräte erhöht sich. Durch die Trägerflüssigkeit wird ein hydraulischer Abgleich, der zwar vorgeschrieben ist, aber in der Regel nicht vom Heizungsmonteur durchgeführt wird, weitgehend überflüssig. Überdies wird der Gefrierpunkt extrem herabgesetzt, je nach Zusammensetzung und Konzentration der Lösung. Der CP Wert (Wärmekapazitätswert) kann je nach Zusammensetzung der Mischung zwischen 1,8 und 4,18 gezielt variiert werden. Die Dampfbildung kann zielgenau durch Mischung zwischen 198˚C und 110˚C gesteuert werden. Das gilt auch für die rheologischen Eigenschaften der Trägerflüssigkeit.
Es ergeben sich zusammenfassend Optimierungen der Heizungssysteme hinsichtlich der Lebensdauer, einer Reduzierung der Verdunstung, eine Erhöhung des pH-Wertes auf etwa 10,0, eine Herabsetzung des Gefrierpunktes (um bis zu 63 Grad), eine Erhöhung des Siedepunktes (um den Faktor 2), eine geringe Ausdehnung des Wärmeträgerflüssigkeit 4%, eine Reduzierung der elektrischen Leitfähigkeit ORP Wert um den Faktor 3 sowie eine extreme Stabilität der Trägerflüssigkeit. Ein Zersetzen der Lösungsbestandteile z.B. in der solarthermischen Anlage und im KFZ-Kühlkreislauf unterbleibt.
Wie bereits aufgezeigt, erfolgt eine um ein mehrfaches beschleunigte Erwärmung der Trägerflüssigkeit sowie eine stärkere Abkühlung bis zu 13˚C gegenüber Wasser.
Nach einem Forschungsbericht der Universität des nahen Ostens ergibt sich darüber hinaus Heizkosteneinsparung durch Brennstoffeinsparung. Korrosionen und Ablagerungen im Heizungssystem sind ausgeschlossen. Die Leistung der Heizungsanlage bleibt weitgehend erhalten. Bei Flächen- und Fußbodenheizungen erfolgt eine reaktionsschnellere Aufheizung gegenüber dem herkömmlichen Fluid Wasser. Der Verdunstungsgrad gegenüber Wasser ist um 8x geringer! (Ofenhitze 40˚C). Ein Auffüllen der Füssigkeit ist kaum nötig und Wartungsarbeiten werden reduziert. Der Härtegrad der Trägerflüssigkeit beträgt in einer vorteilhaften Zusammensetzung gegenüber dem Leitungswasser 119 ppm.

**Patentansprüche**

1.  Kälte- und Wärmeträgerflüssigkeit auf der Basis von Monoethylenglykol zur Einbringung in den jeweiligen Heiz-, Kühl- und Wärmekreislauf eines Systems,
    umfassend:

        - 10 - 90% Monoethylenglykol
        - 10 - 90% Kaliumacetat
        - 1 - 40% Korrosionsinhibitor.

2.  Kälte- und Warmeträgerflüssigkeit nach Anspruch 1,
    umfassend zusätzlich:

        - 0 - 70% Spezialsalz
        - 0 - 10% Propylenglykol

- 0 - 10% Ammoniumacetat
- 0 - 1% Nanosilber
- als Restbestandteil destilliertes Wasser.

3. Kälte- und Wärmeträgerflüssigkeit nach Anspruch 1,
   umfassend:

   - 70 - 90% Monoethylenglykol
   - 10 - 50% Kaliumacetat
   - 5% Korrosionsinhibitor
   - 0 - 10% Propylenglykol
   - 0 - 10% Ammoniumacetat sowie als
   - Restbestandteil destilliertes Wasser.

4. Kälte- und Wärmeträgerflüssigkeit nach Anspruch 1,
   umfassend:

   - 10 - 60% Monoethylenglykol
   - 10 - 50% Kaliumacetat
   - 20 - 40% Korrosionsinheibitor sowie als
   - Restbestandteil destilliertes Wasser.

5. Kälte- und Wärmeträgerflüssigkeit nach Anspruch 1,
   umfassend:

   - 10% Monoethylenglykol
   - 10 - 50% Kaliumacetat
   - <2% Korrosionsinheibitor
   - 50 - 70% Spezialsalz sowie als
   - Restbestandteil destilliertes Wasser.

6. Verwendung der Kälte- und Wärmeträgerflüssigkeit nach einem der vorangegangenen Ansprüche als Wärmeträgermittel im Heizungskreislauf.

7. Verwendung der Kälte- und Wärmeträgerflüssigkeit nach einem der vorangegangenen Ansprüche als Wärmeträgermittel in der Fernwärmetechnik.

8. Verwendung der Kälte- und Wärmeträgerflüssigkeit nach einem der vorangegangenen Ansprüche als Kühlerflüssigkeit in Fahrzeugen.

9. Verwendung der Kälte- und Wärmeträgerflüssigkeit nach einem der vorangegangenen Ansprüche als Wärmeträgermittel in der Solarthermie und in der Geothermie.

10. Verwendung der Kälte- und Wärmeträgerflüssigkeit nach einem der vorangegangenen Ansprüche Werkzeugmaschinen Vorwärmung von Kraftwerkprozessen.

$$Cp = -2E\text{-}05 \cdot T^2 + 0{,}0021 \cdot T + 3{,}1222$$

$$Cp = -4E\text{-}05 \cdot T^2 + 0{,}0035 \cdot T + 3{,}0341$$

spez. Wärmekapazität [kJ/(kg·K)]

Temperatur [°C]; P = 1 bar

Fig. 1

# Fig. 2

$Cp = 0{,}0039 \cdot T + 2{,}1755$

Temperatur [°C]; P = 1 bar

spez. Wärmekapazität [kJ/(kg K)]

## Fig. 3

## Fig. 4

# Fig. 5

| QS-100 | | | | Water | | | | | |
|---|---|---|---|---|---|---|---|---|---|
| Nr. | T | λ | Cp | Sample Nr | λ | Cp | T_u | T_0 | T_m |
| | °C | W/m K | J/ kg K | | W/(m K) | J/(kg K) | °C | °C | °C |
| 1 | 20 | 0,272 | 1943,5 | 1 | 0,599 | 4159,9 | 20,70 | 20,60 | 20,65 |
| 2 | 25 | 0,278 | 1983,3 | 2 | 0,601 | 4170,8 | 21,10 | 20,60 | 20,85 |
| 3 | 30 | 0,283 | 2015,8 | 3 | 0,605 | 4186,5 | 21,60 | 20,50 | 21,05 |
| 4 | 35 | 0,287 | 2043,3 | 4 | 0,604 | 4183,3 | 21,60 | 20,60 | 21,10 |
| 5 | 40 | 0,291 | 2067,1 | 5 | 0,602 | 4171,6 | 20,60 | 20,50 | 20,55 |
| 6 | 45 | 0,294 | 2088,1 | 6 | 0,604 | 4184,6 | 21,10 | 20,50 | 20,80 |
| 7 | 50 | 0,296 | 2106,9 | 7 | 0,606 | 4192,0 | 21,50 | 20,40 | 20,95 |
| 8 | 60 | 0,301 | 2139,4 | 8 | 0,609 | 4208,8 | 21,60 | 20,50 | 21,05 |
| | | | | 9 | 0,608 | 4204,9 | 21,20 | 20,50 | 20,85 |
| | | | | 10 | 0,603 | 4177,8 | 20,60 | 20,50 | 20,55 |
| | | | | Average: | 0,6041 | 4184,0 | 21,16 | 20,52 | 20,84 |

# Fig. 6

## Fig. 7

Legend:
- Wasser
- T (LMP Cold)
- T (QS100 Green)
- T (QS100 Heizungsblut)

Y-axis: Temperatur [°C]
X-axis: Zeit [min]

## Fig. 8

— 100 % Wasser — 50 % Wasser-reine Flüssigkeit Gemisch — 100 % reine Flüssigkeit

Y-axis: Temperatur [°C]
X-axis: Zeit [hh:mm:ss]

# Fig. 9

| Flüssigkeitsverhältnisse | Temperaturspanne | Temperaturdifferenz | Zeit [min] |
|---|---|---|---|
| Erwärmung | | | |
| 100 % Wasser | 40 °C bis 100 °C | 60 °C | 67,5 |
| 50 % Wasser-reine Flüssigkeit Gemisch | | | 35,17 |
| 100 % reine Flüssigkeit | | | 26,25 |
| Abkühlung | | | |
| 100 % Wasser | 100 °C bis 40 °C | 60 °C | 122,83 |
| 50 % Wasser-reine Flüssigkeit Gemisch | | | 147 |
| 100 % reine Flüssigkeit | | | 274,42 |

# Fig. 10

| Flüssigkeitsverhältnisse | Temperaturspanne | Temperaturdifferenz | Zeit [min] |
|---|---|---|---|
| Erwärmung | | | |
| 100 % Wasser | 60 °C bis 80 °C | 20 °C | 17 |
| 50 % Wasser-reine Flüssigkeit Gemisch | | | 11,20 |
| 100 % reine Flüssigkeit | | | 8,83 |
| Abkühlung | | | |
| 100 % Wasser | 80 °C bis 60 °C | 20 °C | 30 |
| 50 % Wasser-reine Flüssigkeit Gemisch | | | 35,45 |
| 100 % reine Flüssigkeit | | | 69,17 |

## Fig. 11

| Zeit [hh:mm:ss] | 100 % Wasser | 50 % Wasser-reine Flüssigkeit Gemisch | 100 % reine Flüssigkeit |
|---|---|---|---|
| 00:00:00 | 36,9 °C | 36,9 °C | 36,9 °C |
| 00:05:00 | 46,4 °C | 47,2 °C | 50,6 °C |
| 00:10:00 | 55,1 °C | 58,2 °C | 62,7 °C |
| 00:15:00 | 62,5 °C | 68,3 °C | 74,9 °C |
| 00:20:00 | 69,3 °C | 77,4 °C | 85,7 °C |
| 00:25:00 | 75,3 °C | 84,7 °C | 95,7 °C |
| 00:27:15 | 77,7 °C | 88,7 °C | 100 °C |
| 00:30:00 | 80,6 °C | 91,2 °C | |
| 00:35:00 | 84,5 °C | 97,3 °C | |
| 00:36:50 | 86 °C | 100 °C | |
| 00:40:00 | 87,6 °C | | |
| 00:45:00 | 90,3 °C | | |
| 00:50:00 | 92,5 °C | | |
| 00:55:00 | 94,2 °C | | |
| 01:00:00 | 96 °C | | |
| 01:05:00 | 96,9 °C | | |
| 01:09:10 | 100 °C | | |

## Fig. 12

| Zeit [hh:mm:ss] | 100 % Wasser | 50 % Wasser-reine Flüssigkeit Gemisch | 100 % reine Flüssigkeit |
|---|---|---|---|
| 00:00:00 | 98,3 °C | 98,3 °C | 98,3 °C |
| 00:30:00 | 66,8 °C | 71,2 °C | 78,4 °C |
| 01:00:00 | 53,3 °C | 57,6 °C | 68,2 °C |
| 01:30:00 | 45,5 °C | 49,3 °C | 61 °C |
| 02:00:00 | 40,4 °C | 43,7 °C | 55,5 °C |
| 02:30:00 | 36,9 °C | 39,5 °C | 51 °C |
| 02:53:45 | 34,8 °C | 37,1 °C | 48 °C |
| 03:00:00 | | 36,5 °C | 47,3 °C |
| 03:22:15 | | 34,8 °C | 45,1 °C |
| 03:30:00 | | | 44,4 °C |
| 04:00:00 | | | 42 °C |
| 04:30:00 | | | 40 °C |
| 05:00:00 | | | 38,4 °C |
| 05:30:00 | | | 36,9 °C |
| 06:00:00 | | | 35,7 °C |
| 06:30:00 | | | 35,7 °C |
| 06:57:05 | | | 34,8 °C |

## Fig. 13

| Flüssigkeitsverhältnisse | Temperaturspanne | Temperaturdifferenz | Zeit [min] | |
|---|---|---|---|---|
| | | | 1,5 liter | 3 liter |
| **Erwärmung** | | | | |
| 100 % Wasser | 40 °C bis 100 °C | 60 °C | 33,42 | 67,5 |
| 50 % Wasser-reine Flüssigkeit Gemisch | | | 20 | 35,17 |
| 100 % reine Flüssigkeit | | | 12,83 | 26,25 |
| **Abkühlung** | | | | |
| 100 % Wasser | 100 °C bis 40 °C | 60 °C | 74,25 | 122,83 |
| 50 % Wasser-reine Flüssigkeit Gemisch | | | 102,92 | 147 |
| 100 % reine Flüssigkeit | | | 174,33 | 274,42 |

## Fig. 14

| Flüssigkeitsverhältnisse | Temperaturspanne | Temperaturdifferenz | Zeit [min] | |
|---|---|---|---|---|
| | | | 1,5 liter | 3 liter |
| **Erwärmung** | | | | |
| 100 % Wasser | 60 °C bis 80 °C | 20 °C | 8,42 | 17 |
| 50 % Wasser-reine Flüssigkeit Gemisch | | | 6,17 | 11,20 |
| 100 % reine Flüssigkeit | | | 4 | 8,83 |
| **Abkühlung** | | | | |
| 100 % Wasser | 80 °C bis 60 °C | 20 °C | 17,58 | 30 |
| 50 % Wasser-reine Flüssigkeit Gemisch | | | 23,42 | 35,45 |
| 100 % reine Flüssigkeit | | | 41 | 69,17 |

# Fig. 15